# EUROPEAN PATENT SPECIFICATION

(11) **EP 0 493 858 B1**
(45) Date of publication and mention of the grant of the patent: **06.12.1995**
(21) Application number: 91203412.1
(22) Date of filing: 24.12.1991
(51) Int. Cl.: C04B 20/02, C04B 14/06, C04B 28/02

(54) **Sand-cement mixture suitable for mortar**
Sand/Zement Gemisch geeignet für Mörtel
Melange sable/ciment convenant pour mortier

(30) Priority: 31.12.1990 NL 9002907
(43) Date of publication of application: 08.07.1992
(73) Proprietor: B.V. Grint- en Zandexploitatiemaatschappij v/h Gebrs. Smals, NL-6049 BX Herten (NL)
(72) Inventor: Smals, Michael Renier, NL-6049 CC Herten (NL)
(74) Representative: Hoorweg, Petrus Nicolaas

(56) References cited:
- DE-A- 2 002 621
- FR-A- 509 465
- FR-A- 698 422
- FR-A- 992 896
- GB-A- 1 580 908
- LU-A- 28 186
- CHEMICAL ABSTRACTS, vol. 84, no. 10, 8 March 1976, Columbus, Ohio, US; abstract no. 64592M, M. DAIRAKU: 'Cement additive for improving the fluidity and strenght of cement' page 344 ; & JP-A-5061424

## Description

The invention relates to a mixture suitable for special building mortars, particularly for floors, bricklaying and/or pointing work, which mixture comprises at least a sand and a cement fraction.

Mortars for the building industry are normally obtained by mixing sand, cement and water, either with or without extra additives such as filler materials. Such mixes have a comparatively low bending/tensile strength and are subject to shrink phenomena. The comparatively low bending/tensile strength is a drawback for mortars which must resist forces, for instance floor and bricklaying mortar respectively. The shrink rate is of significance in pointing mortars.

In a mixture known from LU-A-28.186 the sand fraction is composed of a quantity of river sand and a quantity of crushed sand obtained by mechanical size reduction from natural stone such as limestone, granite, marble or the like.

Due to the addition of sharp-contoured granulate, a distinguishing property of sand obtained by mechanical size reduction, to the normally used river sand grains, it is possible to increase the bending/tensile strength without detracting from the workability. Rounded river sand is in any case usually used because of the easy workability of the mortar obtained therewith.

The invention has for its object to influence the mix of the type described in the preamble in order to ameliorate said mixture for particular applications.

It has been established in tests that a mix of 65% broken natural stone plus 35% natural sand provides an increase of the compressive strength of about 20% and an increase in the bending/tensile strength of about 60%.

It has also been determined in tests that with different ratios of cement to sand, which may vary from 1:10 to 1:5, the strength increases as the cement factor becomes larger. It is recommended that the natural stone granulate has a granular structure of 0 to 2 mm and the natural sand a granular structure of 125 »m to 1 mm.

A mix suitable for level-flow floors is according to the invention more particularly distinguished in that the natural stone granulate has a granular structure of 20 »m to 3 mm and the natural sand a granular structure of 250 to 500»m, wherein the ratio of granulate and river sand varies from 80-20 and 60-40% respectively.

The following values apply in the case of pointing mortar: The natural stone granulate has a granular structure of 63 »m to 1 mm and the river sand a granular structure of 20 to 63 »m. The percentage of natural stone granulate here lies below 50% of the total sand fraction.

The following values apply in the case of bricklaying mortar: The granular structure of natural stone granulate varies between 20 »m and 2 mm and that of natural sand between 63 »m and 2 mm. The percentage of natural stone granulate in the total sand fraction is here preferably more than 50%.

It has been found that both for floor and bricklaying mortar the natural stone granulate must make up more than half the sand fraction in order to increase respectively the desired compressive strength and bending/tensile strength.

In order to reduce the shrink factor in the case of pointing mortar the amount of natural stone granulate must lie below 50%.

The improvement in the bending/tensile strength and the compressive strength in a mix suitable for floors is further elucidated hereinbelow with reference to a number of tests.

The tests were carried out with six mixtures, in which the ratio of cement to sand varied from 1:10 to 1:5.

| | 1:5 | 1:6 | 1:7 | 1:8 | 1:9 |
|---|---|---|---|---|---|
| sand (kg) | 10 | 10 | 14.994 | 17.136 | 19.278 |
| cement (kg) | 2 | 1.667 | 2 | 2 | 2 |
| water (l) | 0.830 | 0.630 | 0.543 | 0.611 | 0.660 |

The temperature of the mortar was 21°C and the mixing time to obtain the mixture was 4 minutes. The sand fraction consists of 70% broken limestone and 30% river sand.

The cement fraction was formed by portland fly ash cement from the manufacturer ENCI.

From the graphs can be seen that the strength ratio increases considerably in comparison to mixtures of only river sand, see the curves I - II - III, and the above mentioned percentage of 70% crushed sand, see the curves IV - V. It is noted here that curve I is a measurement after one day of curing, curves II, V have undergone a curing time of 28 days and the curves III, IV a curing time of 7 days.

It can be seen clearly from the graphs that the addition of crushed sand to the mix in all the ratios of sand to cement gives an increase in the compressive strength and bending/tensile strength respectively.

The invention is of course not limited to the above stated mixing quantities and ratios.

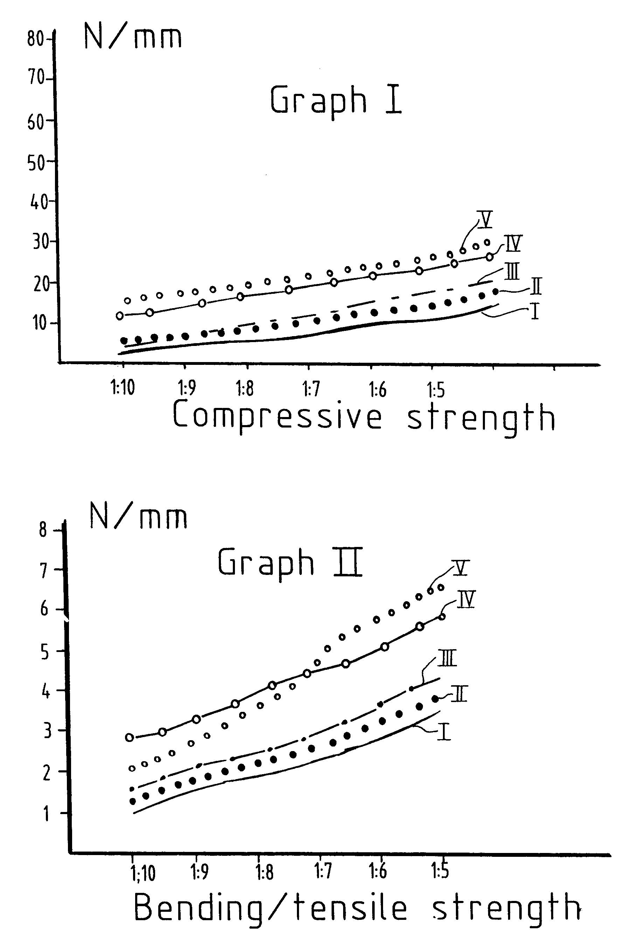

## Claims

1. Mixture suitable for special building mortars, as floor mortar, said mixture comprises at least a sand and a cement fraction, wherein the sand fraction is composed of a quantity of river sand and a quantity of crushed sand obtained by mechanical size reduction from natural stone such as limestone, granite, marble or the like, **characterized in that** the sand fraction is composed of a river sand with a grain size distribution of 250 to 500 »m and a crushed sand with a grain size distribution of 20 »m to 3 mm, wherein the percentage of crushed sand lies between 80 and 60% of the total sand fraction.

2. Mixture suitable for special building mortars, as pointing mortar, said mixture comprises at least a sand and a cement fraction, wherein the sand fraction is composed of a quantity of river sand and a quantity of crushed sand obtained by mechanical size reduction from natural stone such as limestone, granite, marble or the like, **characterized in that** the sand fraction is composed of river sand with a grain size distribution of 20 to 62 »m and a crushed sand with a grain size distribution between 63 »m and 1 mm, wherein the crushed sand makes up less than 50% of the total sand fraction.

3. Mixture suitable for special building mortars, as for bricklaying mortar, said mixture comprises at least a sand and a cement fraction, wherein the sand fraction is composed of a quantity of river sand and a quantity of crushed sand obtained by mechanical size reduction from natural stone such as limestone, granite, marble or the like, **characterized in that** the sand fraction is composed of a river sand with a grain size between 63 »m and 2 mm and a crushed sand with a grain size between 20 »m and 2 mm, wherein the quantity of crushed sand makes up more than 50% of the total sand fraction.

## Patentansprüche

1. Gemisch, geeignet für Spezial-Baumörtel wie Fußboden-Mörtel, wobei das Gemisch zumindest einen Sand- und einen Zementanteil aufweist, bei welchem der Sandanteil aus einem Anteil Flußsand und einem Anteil zerkleinertem Sand, welcher durch mechanische Zerkleinerung von natürlichem Stein wie Kalkstein, Granit, Marmor oder ähnlichem erhalten wird, zusammengesetzt ist, dadurch gekennzeichnet, daß der Sandanteil aus einem Anteil Flußsand mit einer Korngrößenverteilung von 250 bis 500 »m und einem Anteil zerkleinertem Sand mit einer Korngrößenverteilung von 20 »m bis 3 mm zusammengesetzt ist, wobei der Prozentsatz von zerkleinertem Sand zwischen 80 und 60% des gesamten Sandanteils liegt.

2. Gemisch, geeignet für Spezial-Baumörtel wie Ausfugungs-Mörtel, wobei das Gemisch zumindest einen Sand- und einen Zementanteil aufweist, bei welchem der Sandanteil aus einem Anteil Flußsand und einem Anteil zerkleinertem Sand, welcher durch mechanische Zerkleinerung von natürlichem Stein wie Kalkstein, Granit, Marmor oder ähnlichem erhalten wird, zusammengesetzt ist, dadurch gekennzeichnet, daß der Sandanteil aus einem Anteil Flußsand mit einer Korngrößenverteilung von 20 bis 62 »m und einem Anteil zerkleinertem Sand mit einer Korngrößenverteilung von 63 »m bis 1 mm zusammengesetzt ist, wobei der Prozentsatz des zerkleinerten Sandes bis zu 50% des gesamten Sandanteils ausmacht.

3. Gemisch, geeignet für Spezial-Baumörtel wie Mörtel zum Mauern, wobei das Gemisch zumindest einen Sand- und einen Zementanteil aufweist, bei welchem der Sandanteil aus einem Anteil Flußsand und einem Anteil zerkleinertem Sand, welcher durch mechanische Zerkleinerung von natürlichem Stein wie Kalkstein, Granit, Marmor oder ähnlichem erhalten wird, zusammengesetzt ist, dadurch gekennzeichnet, daß der Sandanteil aus einem Anteil Flußsand mit einer Korngrößenverteilung von 63 »m bis 2 mm und einem Anteil zerkleinertem Sand mit einer Korngrößenverteilung von 20 »m bis 2 mm zusammengesetzt ist, wobei der Prozentsatz des zerkleinerten Sandes mehr als 50% des gesamten Sandanteils ausmacht.

## Revendications

1. Mélange approprié pour les mortiers de construction spéciaux, comme le mortier pour sols, ledit mélange comprenant au moins une fraction de sable et de ciment, dans lequel la fraction de sable est composée d'une certaine quantité de sable de rivière et d'une certaine quantité de sable broyé obtenu par fragmentation mécanique à partir de pierre naturelle comme le calcaire, le granite, le marbre ou similaire, caractérisé en ce que la fraction de sable est composée de sable de rivière ayant une granulométrie de 250 à 500 »m et de sable broyé ayant une granulométrie de 20 »m à 3 mm, et en ce que le pourcentage de sable broyé se situe entre 80 et 60 % de la fraction totale de sable.

2. Mélange approprié pour les mortiers de construction spéciaux comme le mortier pour jointoiement, ledit mélange comprenant au moins une fraction de sable et de ciment, dans lequel la fraction de sable est composée d'une certaine quantité de sable de rivière et d'une certaine quantité de sable broyé obtenu par fragmentation mécanique à partir de pierre naturelle comme le calcaire, le granite, le marbre ou similaire, caractérisé en ce que la fraction de sable est composée de sable de rivière ayant une granulométrie de 20 à 62 »m et de sable broyé ayant une granulométrie situé entre 63 »m et 1 mm, et en ce que le sable broyé représente moins de 50 % de la fraction totale de sable.

3. Mélange approprié pour les mortiers de construction spéciaux, comme les mortiers pour la maçonnerie en briques, ledit mélange comprenant au moins une fraction de sable et de ciment, dans lequel la fraction de sable est composée d'une certaine quantité de sable de rivière et d'une certaine quantité de sable broyé obtenu par fragmentation mécanique à partir de pierre naturelle, comme le calcaire, le granite, le marbre ou similaire, caractérisé en ce que la fraction de sable est composée de sable de rivière ayant une granulométrie situé entre 63 »m et 2 mm et de sable broyé ayant une granulométrie situé entre 20 » et 2 mm, et en ce que la quantité de sable broyé représente plus de 50 % de la fraction totale de sable.
